(19) Europäisches Patentamt
European Patent Office
Office européen des brevets

(11) Veröffentlichungsnummer: **0 223 101 B1**

# (12) EUROPÄISCHE PATENTSCHRIFT

(45) Veröffentlichungstag der Patentschrift: **02.01.92**

(51) Int. Cl.$^5$: **H02P 7/282**, H02P 7/00, H02P 5/178

(21) Anmeldenummer: **86114760.1**

(22) Anmeldetag: **23.10.86**

## (54) Steuervorrichtung für einen fremderregten Gleichstromantriebsmotor und Verfahren zum Steuern eines Gleichstromantriebsmotors einer Druckmaschine.

(30) Priorität: **22.11.85 DE 3541276**

(43) Veröffentlichungstag der Anmeldung:
**27.05.87 Patentblatt 87/22**

(45) Bekanntmachung des Hinweises auf die Patenterteilung:
**02.01.92 Patentblatt 92/01**

(84) Benannte Vertragsstaaten:
**BE CH DE FR GB IT LI NL SE**

(56) Entgegenhaltungen:
**EP-A- 0 200 713**
**GB-A- 2 074 404**
**US-A- 4 399 892**

**I.E.E. PROCEDINGS SECTIONS Aal, Band 130, Nr. 2, Part B, März 1983, Seiten 143-147; B.A. WHITE et al.: "A simple digital control scheme for a DC motor"**

(73) Patentinhaber: **Heidelberger Druckmaschinen Aktiengesellschaft**
**Kurfürsten-Anlage 52-60 Postfach 10 29 40**
**W-6900 Heidelberg 1(DE)**

(72) Erfinder: **Rodi, Anton**
**Karlsruher-Strasse 12**
**W-6906 Leimen 3(DE)**

(74) Vertreter: **Stoltenberg, Baldo Heinz-Herbert**
**c/o Heidelberger Druckmaschinen AG**
**Kurfürsten-Anlage 52-60**
**W-6900 Heidelberg 1(DE)**

EP 0 223 101 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Steuervorrichtung für einen fremderregt en Gleichstrom-Antriebsmotor einer Druckmaschine mit einer Einrichtung zum Erzeugen des einer Feldwicklung des Motors zuzuführenden Erregerstroms, einer Recheneinrichtung und/oder einer Regeleinrichtung.

Die Drehzahl derartiger Motoren wird durch geeignete Wahl der Ankerspannung eingestellt, wobei insbesondere bei Druckmaschinen, vorzugsweise Offset-Druckmaschinen, eine genaue Einhaltung der von einem Stellpult her vorgegebenen Drehzahl erforderlich ist. Die technischen Daten der in Serienfertigung hergestellten Motoren unterscheiden sich aufgrund von Fertigungs- und Materialtoleranzen. Wegen dieser Toleranzen, die ihren Ausdruck in Abweichungen bei verschiedenen Maschinenkonstanten finden, muß der Erregerstrom von Maschine zu Maschine so eingestellt werden, daß sich ein definiertes Verhältnis zwischen der Ankerspannung und der Drehzahl einstellt, so daß eine Drehzahlregelung über die Ankerspannung mit einem definierten Arbeitspunkt arbeiten kann. Zusätzlich zu den genannten Toleranzen können temperaturabhängige und lastabhängige Änderungen der Maschinenkonstanten auftreten.

Im allgemeinen werden die Motoren der hier beschriebenen Art aus einem Wechselstromnetz, insbesondere aus einem Drehstromnetz, mittels steuerbarer Gleichrichter gespeist und es sind im Falle einer Nutzbremsung auch gesteuerte Wechselrichter vorgesehen, die eine Rückspeisung elektrischer Energie ins Netz ermöglichen. Die Erfindung ist hierauf jedoch nicht beschränkt.

Es ist bekannt, z.B. zum Ausgleichen der obengenannten Toleranzen nach dem Zusammenschalten eines bestimmten Motors mit einer bestimmten Steuervorrichtung den Erregerstrom und dadurch das Erregerfeld durch von Hand ausgeführte Einstellvorgänge zu justieren; diese Justage ist schwierig und erfordert qualifiziertes Fachpersonal. Dadurch wird einerseits die Herstellung eines betriebsbereiten Zustands einer Anlage verzögert, andererseits werden hohe Kosten verursacht. Sofern ein Austausch des Antriebsmotors oder der Steuervorrichtung, insbesondere des den Erregerstrom liefernden Teils der Steuervorrichtung, erforderlich wird, sind wiederum die genannten Einstellvorgänge fachmännisch auszufuhren. Weiter ist es bekannt, der Erregerwicklung einen konstanten Strom einzuprägen und Gie obengenannten Toleranzen durch entsprechendes Verändern der Ankerspannung auszugleichen, also im Ankerstromkreis auszuregeln. Dadurch weicht jedoch der Drehzahlbereich des Motors, der durch Variation der Ankerspannung überstrichen werden kann, vom Sollbereich ab. Insbesondere kann bei maximaler Gleichrichter-Ausgangsspannung bei zu starker Erregung nicht die gewünschte maximale Drehzahl erreicht werden. Dies kann zwar vermieden werden, wenn man den Motor für eine kleinere Nennspannung auslegt, aber dann muß der Motor überdimensioniert werden.

In der EP 0 200 713, die nur nach Art. 54 (3)(4) EPÜ zum Stand der Technik gehört, ist eine Einrichtung zur Steuerung des Feldstromes von Gleichstrommotoren beschrieben. Hierbei handelt es sich um Gleichstrommotoren, die über die Grunddrehzahl hinaus in dem durch Feldschwächung erzielbaren, höheren Drehzahlbereich betrieben werden.

Die US-A-4,399,892 beschreibt eine Steuervorrichtung eines Gleichstrommotores für Aufzüge. Insbesondere handelt es sich hierbei um eine Thyristor-Schaltung vom Leonard-Typ.

Eine weitere Steuerung für einen Gleichstrommotor zeigt die GB-A-2 074 404. Diese Steuerung befaßt sich mit der Regelung von Motoren für elektrische Fahrzeuge mittels eines Mikrocomputers.

Der Erfindung liegt die Aufgabe zugrunde, eine Steuervorrichtung der eingangs geschilderten Art zu schaffen, die, ohne daß eine von Hand auszuführende genaue Anpassung an einen Motor erforderlich ist, ein definiertes Betriebsverhalten des Motors ohne die oben genannten Nachteile sicherstellt.

Diese Aufgabe wird gemäß der Erfindung dadurch gelöst, daß eine Meßeinrichtung zum Erfassen von Betriebsgrößen des Motors, nämlich der Feld- und/oder Ankerspannungs- und -stromgrößen vorgesehen ist, und daß die Steuervorrichtung eine Einrichtung aufweist, die aufgrund der erfaßten Betriebsgrößen den Erregerstrom auf einen für den Motor speziellen, ermittelten Wert einstellt, so daß ein vorbestimmtes Verhältnis zwischen Ankerspannung und Drehzahl (bei vorgegebener Belastung) oder zwischen Ankerstrom und Drehmoment vorhanden ist, und den Erregerstrom auf dem ermittelten Wert konstant hält.

Ein Vorteil der Erfindung liegt darin, daß der Erregerstrom ohne komplizierte, von Fachleuten vorzunehmende Einstellarbeiten richtig eingestellt werden kann. Dadurch ermöglicht es die Erfindung, ein gewünschtes Betriebsverhalten des Antriebs und der gesamten Anlage ohne komplizierte, von Fachleuten vorzunehmende Einstellarbeiten zu erreichen. Auch ein Ausregeln der Toleranzen des Erregerkreises im Ankerstromkreis ist nicht erforderlich. Man kann die Anordnung so treffen, daß die Steuervorrichtung völlig selbsttätig den Erregerstrom auf den ermittelten Wert einstellt. Damit die Steuervorrichtung diesen Einstellvorgang automatisch ausführen kann, muß die Steuervorrichtung gespeicherte Daten über das gewünschte Betriebsverhalten enthalten, wobei nachfolgend zur Vereinfachung nur von dem Verhältnis zwischen Ankerspannung und Drehzahl gesprochen wird. Falls alle Motoren eines bestimmten Herstellers, die von ihrem Leistungsbedarf her mit einer bestimmten Steuervorrichtung zusammengeschaltet werden können, das gleiche Verhältnis zwischen Ankerspannung und Drehzahl aufweisen, so kann diese Steuervorrichtung ohne irgendwelche Eingriffe mit allen diesen Motoren zusammengeschaltet werden und stellt dann jeweils den benötigten Erregerstrom automatisch ein. Sofern hinsichtlich des Ankerspannungs-/Drehzahl-Verhältnisses unterschiedliche Motoren mit ein und derselben Steuervorrichtung zusammengeschaltet werden können, so muß dafür gesorgt werden, daß die Steuervorrichtung die Daten für den gerade anzuschließenden Motortyp enthält. Hierzu können die Daten in einem auch von Nichtfachleuten in einen Stecksokkel der Steuervorrichtung einsetzbaren digitalen Speicher enthalten sein.

Es ist bekannt, einen Erregerstrom in der Größe zuzuführen, daß der magnetische Erregerkreis sich in einem Sättigungszustand befindet. Dann wirken sich Durchflutungsabweichungen verringert aus. Dabei wird jedoch eine erhöhte Verlustleistung und Erwärmung in Kauf genommen.

Demgegenüber erlaubt es die Erfindung, wie bei einer Ausführungsform vorgesehen ist den Motor in einem Bereich der Magnetisierungskurve zu betreiben, der außerhalb des Sättigungsbereichs liegt, also in einem Bereich relativ großer Steilheit der Magnetisierungskurve. Eine Vergrößerung des Erregerstroms bewirkt dann eine Vergrößerung des Flusses. Bei konstantem Ankerstrom ist das Drehmoment des Motors dem Fluß proportional. Daher wird eine Ausführungsform der Erfindung möglich, bei der zur kurzzeitigen Vergrößerung des Drehmoments des Motors der Erregerstrom über den ermittelten Wert vergrößert wird. Eine derartige Vergrößerung des Drehmoments kann im Augenblick des Anlaufens des Motors, nämlich zum sog. "Losbrechen" des Motors und der mit ihm verbundenen Druckmaschine erforderlich sein.

Bei einer Ausführungsform der Erfindung ist vorgesehen, daß die Steuervorrichtung derart ausgebildet ist, daß sie bei einem Absinken der Netzspannung den Erregerstrom unter den ermittelten Wert absenkt. Der Vorteil besteht darin, daß sichergestellt werden kann, daß die zur Speisung des Ankers maximal erzeugbare Spannung stets um einen vorbestimmten Betrag oder mehr über der tatsächlich benötigten Ankerspannung liegt. Dadurch ist sichergestellt, daß jederzeit eine Steuerung und Regelung der Drehzahl, auch eine Erhöhung der Drehzahl durch Erhöhung der Ankerspannung möglich ist. Es ist allerdings zu beachten, daß bei abnehmendem Erregerstrom una konstant gehaltenem Ankerstrom das Drehmoment und die abgegebene Leistung abnehmen.

Damit die Steuervorrichtung den ermittelten Wert des Erregerstroms konstant halten kann und diesen Wert auch nach der soeben geschilderten Veränderung des Erregerstroms zwecks Änderung des Drehmoments oder bei Änderungen der Netzspannung wieder sicher einstellen kann, ist bei einer Ausführungsform der Erfindung vorgesehen, daß die Steuervorrichtung einen Speicher zum Abspeichern des ermittelten Werts des Erregerstroms aufweist.

Als zur Erfindung gehörig wird auch ein Verfahren zum Steuern eines fremderregten Gleichstrommotors einer Druckmaschine angesehen. Dieses Verfahren betrifft das Steuern eines fremderregten Gleichstrommotors mit einer Feldwicklung, einem Stromwandler, einer Regelvorrichtung zum Regeln der Ankerspannung und des Erregestromwertes und einer Betriebscharakteristik, welche ein vorbestimmtes Verhältnis zwischen Ankerspannung und Drehzahl und/oder ein vorbestimmtes Verhältnis zwischen Ankerstrom und Drehmoment umfaßt. Dieses Verfahren ist gekennzeichnet durch folgende Schritte:

- Regelung der Drehzahl des Motors über die Ankerspannung
- Änderung des Erregerstroms zur Einstellung der vorbestimmten Betriebscharakteristik des Motors,
- schließlich das Aufrechterhalten des ermittelten Wertes des Erregerstroms.

Einige Möglichkeiten, wie die Steuervorrichtung den einzustellenden Erregerstrom feststellen kann, werden im Anschluß an das Ausführungsbeispiel beschreiben.

Weitere Merkmale und Vorteile der Erfindung ergeben sich aus der nachfolgenden Beschreiung eines Ausführungsbeispiels der Erfindung anhand der Zeichnung, die erfindungswesentliche Einzelheiten zeigt, und aus den Ansprüchen.

Die einzige Figur zeigt schematisch ein Ausführungsbeispiel einer Steuervorrichtung für eine Bogen-Offsetdruckmaschine.

Ein als fremderregter Gleichstrommotor ausgebildeter Motor 1 treibt eine Sechsfarben-Bogen-Offsetmaschine an. Der Ankerstrom für den Motor 1 und der einer Feldwicklung 2 des Motors 1 zugeführte Erregerstrom werden von einem Leistungsteil 3 geliefert, das gesteuerte Gleichrichter (Thyristoren) enthält, durch die die von einem Drehstromnetz 4 gelieferte elektrische Energie in Gleichstrom umgewandelt wird. Beim Bremsbetrieb des Motors 1 kann durch das Leistungsteil elektrische Energie ins Netz 4 zurückgespeist werden. Die Zündimpulse für das Leistungsteil 3 werden von einer Stromrichter-Recheneinrichtung 5 erzeugt und dem Leistungsteil 3 über Leitungen 7 zugeführt. Im Leistungsteil 3 sind Strommeßeinrichtungen und Spannungsmeßeinrichtungen enthalten, deren Meßwerte über Leitungen 8 der Stromrichter-Recheneinrichtung 5 zugeführt werden. Ein mit der Welle des Motors 1 verbundener Tachogenerator 10 liefert ein für die Drehzahl des Motors charakteristisches Signal über eine Leitung 11 an die Stromrichter-Recheneinrichtung 5.

Eine mit der Stromrichter-Recheneinrichtung 5 gekoppelte Recheneinrichtung 12 steht mit einer Maschinensteuerung 13 und mit einem Speicher 14 in Verbindung. Die Maschinensteuerung 13 wird von dem für die Druckmaschine verantwortlichen Drucker betätigt, wobei er beispielsweise das Einschalten und Ausschalten der Druckmaschine und die Drehzahleinstellung an der Maschinensteuerung vornimmt. An der Maschinensteuerung werden auch weitere Einstellvorgänge und Regelvorgänge veranlaßt, die nicht mit dem Antrieb des Motors 1 in unmittelbarem Zusammenhang stehen, beispielsweise die Registerverstellung der Druckmaschine.

Im Speicher 14 sind Parameter für den zum Antrieb der Druckmaschine verwendeten Motor und für die Druckmaschine der in der Figur gezeigten Anlage abgespeichert. Diese Parameter umfassen insbesondere den maximal zulässigen Ankerstrom, die maximal zulässige Ankerspannung, einen ersten Sollwert für den Erregerstrom für die Feldwicklung 2, den zulässigen Drehzahlbereich des Motors 1 und gegebenenfalls andere Werte.

Beim erstmaligen Einschalten der Anlage nach deren Installation wird wegen der eingangs geschilderten Toleranzen der Motor 1 dann, wenn ihm vom Leistungsteil 3 die für eine bestimmte Drehzahl vorgesehene Ankerspannung zugeführt wird, und wenn der Erregerstrom auf den im Speicher 14 eingespeicherten ersten (vorläufigen) Sollwert eingestellt wird, diese Drehzahl nicht genau annehmen, sondern die tatsächliche Drehzahl wird entweder darüber oder darunter liegen. Die Recheneinrichtung 12 enthält ein Programm, das nun bei Konstanthaltung der Ankerspannung den Erregerstrom so variiert, bis die gewünschte Drehzahl erreicht ist. Der Wert des Erregerstroms, bei dem diese Drehzahl erreicht wird, wird nun im Speicher 14 durch die Recheneinrichtung 12 abgespeichert, und außerdem wird die Tatsache abgespeichert, daß es sich bei diesem abgespeicherten Erregerstrom nicht um den ursprünglich abgespeicherten vorläufigen Sollwert für den Erregerstrom handelt, sondern um den aufgrund genauer Messung berichtigten Erregerstrom. Wird die Anlage dann das nächste Mal eingeschaltet, so erfolgt keine erneute Ermittlung des Erregerstroms, weil dieser bereits genau bekannt ist. Da in der soeben geschilderten Weise der Erregerstrom selbsttätig auf den gewünschten Wert geregelt wird, ist die Recheneinrichtung 12 gleichzeitig eine Regeleinrichtung. Man kann auch nach jedem Einschalten der Anlage erneut den Erregerstrom ermitteln.

Bei Bedarf können der Spannungsabfall der Ankerwicklung und die Ankerrückwirkung berücksichtigt werden.

Es bestehen auch andere Möglichkeiten, den zur Erzielung eines vorbestimmten Betriebsverhaltens des Motors 1 benötigten Erregerstrom festzustellen. So kann zunächst der erste Sollwert $i_{Fo}$ für den Erregerstrom und die Nennankerspannung $u_{Ao}$ eingestellt werden. Dadurch ergibt sich eine Drehzahl $n_i$, die normalerweise von der gewünschten Nenndrehzahl $n_o$ abweicht und die daher anschließend jetzt durch Ändern der Ankerspannung auf die Nenndrehzahl gebracht wird. Die Ankerspannung hat dann den Wert $u_{Ai}$. Der tatsächlich benötigte Erregerstrom $i_{Fi}$ ergibt sich angenähert zu

$$i_{Fi} \approx \frac{u_{Ai} \times i_{Fo}}{u_{Ao}} .$$

Bei einem anderen Verfahren wird bei gegebenem ersten Sollwert $i_{Fo}$ für den Erregerstrom und bei einer gemessenen Ankerspannung $u_{Ai}$ bei der Solldrehzahl $n_o$ die Ankerspan nung anschließend geändert, bis sie den Nennwert $u_{Ao}$ für die Ankerspannung hat. Dabei stellt sich die Drehzahl $n_i$ ein. Das Verhältnis $n_o/n_i$, multipliziert mit dem ersten Sollwert $i_{Fo}$ für den Erregerstrom, ergibt ebenfalls den tatsächlich benötigten Erregerstrom $i_{Fi}$.

Der in der oben geschilderten Weise ermittelte tatsächlich benötigte Erregerstrom wird, wie bereits erwähnt, im Speicher 14 abgespeichert und steht daher ständig zur Verfügung.

Beim Anfahren der Anlage aus dem Stillstand, dem sog. "Losbrechen", wird ein erhöhtes Drehmoment benötigt. Wenn dieses erhöhte Drehmoment nicht durch einen erhöhten Ankerstrom aufgebracht werden soll, so kann der Erregerstrom kurzzeitig erhöht werden und nach dem Losbrechen wieder auf den im Speicher 14 gespeicherten Wert reduziert werden.

Die obengenannten Verfahren zum Ermitteln des tatsächlich benötigten Erregerstroms laufen vorzugsweise, wie beschrieben, automatisch anhand eines in der Recheneinrichtung enthaltenen Programms ab.

## Patentansprüche

**1.** Die Erfindung betrifft eine Steuervorrichtung für einen fremd erregten Gleichstrom-Antriebsmotor (1) einer Druckmaschine, mit einer Einrichtung (3) zum Erzeugen des einer Feldwicklung (2) des Motors zuzuführenden Erregerstroms, einer Recheneinrichtung (12) und/oder einer Regeleinrichtung (5),
**dadurch gekennzeichnet,**
daß eine Meßeinrichtung zum Erfassen von Betriebsgrößen des Motors (1), nämlich der Feld- und/oder Ankerspannungs- und -stromgrößen vorgesehen ist, und daß die Steuervorrichtung eine Einrichtung aufweist, die aufgrund der erfaßten Betriebsgrößen den Erregerstrom auf einen für den Motor (1) speziellen, ermittelten Wert einstellt, so daß ein vorbestimmtes Verhältnis zwischen Ankerspannung und Drehzahl (bei vorgegebener Belastung) oder zwischen Ankerstrom und Drehmoment vorhanden ist, und den Erregerstrom auf dem ermittelten Wert konstant hält.

**2.** Steuervorrichtung nach Anspruch 1, dadurch gekennzeichnet, daß sie derart ausgebildet ist, daß sie den Erregerstrom auf einen derartigen Wert einstellt, daß der durch diesen verursachte magnetische Fluß unterhalb des Sättigungsbereichs der Magnetisierungskurve liegt.

**3.** Steuervorrichtung nach Anspruch 2, dadurch gekennzeichnet, daß sie derart ausgebildet ist, daß sie zur kurzzeitigen Vergrößerung des Drehmoments des Motors den Erregerstrom über den ermittelten Wert vergrößert.

**4.** Steuervorrichtung nach einem der vorhergehenden Ansprüche, dadurch gekennzeichnet, daß sie derart ausgebildet ist, daß sie bei einem Absinken der Netzspannung den Erregerstrom unter den ermittelten Wert absenkt.

**5.** Steuervorrichtung nach einem der vorhergehenden Ansprüche, dadurch gekennzeichnet, daß sie einen Speicher (14) zum Abspeichern des ermittelten Werts des Erregerstroms aufweist.

**6.** Verfahren zum Steuern eines fremderregten Gleichstrommotors mit
- einer Feldwicklung (2),
- einem Stromwandler,
- einer Regelvorrichtung (5) zum Regeln der Ankerspannung und des Erregerstromwertes,
- einer Betriebscharakteristik, welche ein vorbestimmtes Verhältnis zwischen Ankerspannung und Drehzahl und/oder ein vorbestimmtes Verhältnis zwischen Ankerstrom und Drehmoment umfaßt,

gekennzeichnet durch folgende Schritte,
- Regelung der Drehzahl des Motors (1) über die Ankerspannung,
- Änderung des Erregerstroms zur Einstellung der vorbestimmten Betriebscharakteristik des Motors (1) und
- schließlich das Aufrechterhalten des ermittelten Wertes des Erregerstroms.

## Claims

**1.** The invention relates to a control mechanism for a separately excited DC drive motor (1) of a printing machine, said control mechanism comprising a device (3) for generating an exciter current to be supplied to a field winding (2) of said motor, a computing unit (12) and/or a control device (5),
characterized in
that a measuring device is provided for detecting operational values of said motor (1), i.e. the field voltage value and/or the field current value and/or the armature voltage value and/or the armature current value, and that said control device is equipped with a device which, on the basis of the operating values detected, adjusts the exciter current to a value specifically determined for the motor (1) so that between armature voltage and rotary speed (at a given load) or between armature current and torque there exists a pre-determined ratio which keeps constant the exciter current at said determined value.

**2.** Control mechanism according to Claim 1,
characterized in
that the control mechanism is of such design as to adjust the exciter current to a value at which a magnetic flux caused by the exciter current is below the saturation range of a magnetization curve.

**3.** Control mechanism according to Claim 2,
characterized in
that the control mechanism is of such design as to increase the exciter current above said determined value for temporarily increasing the torque of the motor.

**4.** Control mechanism according to one of the preceding claims,
characterized in
that the control mechanism is of such design as to decrease the exciter current below said determined value upon a drop in mains voltage.

**5.** Control mechanism according to one of the preceding claims,

characterized in
that the control mechanism comprises a memory (14) for storing the determined value of the exciter current.

**6.** Method of controlling a separately excited DC motor having a field winding (2), a current converter, a control device (5) for controlling the armature voltage and the exciter current value, and an operational characteristic including a pre-determined ratio of armature voltage to rotary speed and/or a pre-determined ratio of armature current to torque,
said method being characterized by the following steps: controlling the rotary speed of the motor (1) via the armature voltage, modifying the exciter current for adjustment of the predetermined operational characteristic of said motor (1) and, finally, maintaining the determined value of the exciter current.

## Revendications

**1.** Dispositif de commande d'un moteur (1) à courant continu à excitation séparée d'entraînement d'une machine d'impression, comprenant un dispositif (3) de production du courant d'excitation devant être envoyé à un enroulement de champ (2) du moteur, un ordinateur (12) et/ou un dispositif de réglage (5),
caractérisé en ce que
un dispositif de mesure est prévu pour détecter des grandeurs de service du moteur (1), à savoir les valeurs de la tension et du courant de champ et/ou d'induit et en ce que le dispositif de commande comprend un appareillage qui, sur la base des grandeurs de service détectées, règle le courant d'excitation à une valeur déterminée, particulière au moteur (1), de manière qu'un rapport prédéterminé existe entre la tension d'induit et la vitesse (sous charge prédéterminée) ou entre le courant d'induit et le couple, et maintienne le courant d'excitation constant à la valeur déterminée.

**2.** Dispositif de commande selon la revendication 1, caractérisé en ce qu'il est réalisé de manière qu'il règle le courant d'excitation à une valeur telle que le flux magnétique qu'il produit soit inférieur à la plage de saturation de la courbe d'aimantation.

**3.** Dispositif de commande selon la revendication 2, caractérisé en ce qu'il est réalisé de manière qu'il élève le courant d'excitation au-dessus de la valeur déterminée pour augmenter brièvement le couple du moteur.

**4.** Dispositif de commande selon l'une des revendications précédentes, caractérisé en ce qu'il est réalisé de manière qu'il abaisse le courant d'excitation au-dessous de la valeur déterminée en cas de chute de la tension du réseau.

**5.** Dispositif de commande selon l'une des revendications précédentes, caractérisé en ce qu'il comprend une mémoire (14) d'enregistrement de la valeur déterminée du courant d'excitation.

**6.** Procédé de commande d'un moteur à courant continu, à excitation séparée, qui comprend,
- un enroulement de champ (2)
- un transformateur de courant,
- un dispositif (5) de réglage de la tension d'induit et de la valeur du courant d'excitation,
- ledit moteur ayant une caractéristique de service qui inclut un rapport prédéterminé entre la tension d'induit et la vitesse et/ou un rapport prédéterminé entre le courant d'induit et le couple,

caractérisé par les étapes suivantes:
- réglage de la vitesse du moteur (1) par la tension d'induit,
- variation du courant d'excitation pour l'établissement de la caractéristique prédéterminée de fonctionnement du moteur (1) et
- finalement, maintien de la valeur déterminée du courant d'excitation.

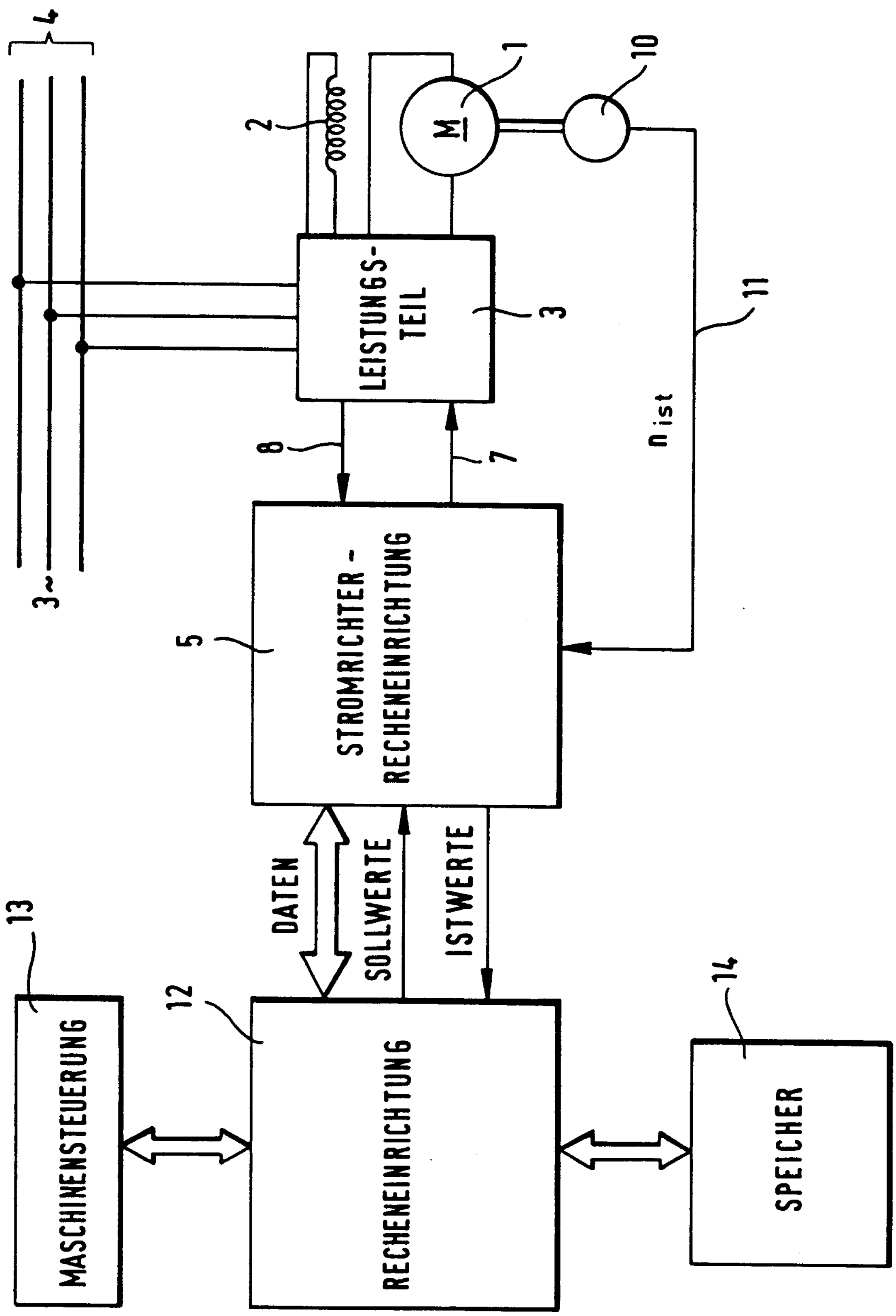
4
3~
2
1
M
10
LEISTUNGS-TEIL
3
8
7
11
n ist
STROMRICHTER-RECHENEINRICHTUNG
5
DATEN
SOLLWERTE
ISTWERTE
13
12
MASCHINENSTEUERUNG
RECHENEINRICHTUNG
14
SPEICHER